# EUROPEAN PATENT SPECIFICATION

(11) **EP 0 363 816 B1**
(45) Date of publication and mention of the grant of the patent: **01.03.1995**
(21) Application number: 89118467.3
(22) Date of filing: 05.10.1989
(51) Int. Cl.: B65B 13/14

(54) **Machine for the automatic production of portions of toasted bread slices**
Vorrichtung für die automatische Produktion von Portionen getoasteter Brotscheiben
Machine pour la production automatique de portions de tranches de pain toasté

(30) Priority: 12.10.1988 IT 4844688
(43) Date of publication of application: 18.04.1990
(73) Proprietor: FABBRICA BISCOTTI P. GENTILINI S.r.l., I-00131 Roma (IT)
(72) Inventor: Natanne, Antonio, I-00012 Roma (IT)
(74) Representative: Gustorf, Gerhard, Dipl.-Ing.

(56) References cited:
- FR-A- 2 368 422
- US-A- 2 358 240
- US-A- 2 671 589

## Description

The present invention relates to a machine for the automatic production of portions of toasted bread slices or the like as set forth in the preamble of claim 1.

Such a machine is known by US-A 4 026 406. In this machine the slices fall directly, through the vertical part of the curved guides, to a conveyor belt, and the packages are formed by means of a blocking device at the end of the belt.

It is an object of the invention to provide a machine which is of a simple construction and which is able to produce portions of toasted bread slices to be packaged in any desired number without the risk of jamming caused by the friction between one slice and the other.

According to the invention, this problem is solved by a machine having the features of the characterising part of claim 1.

The slices are held within the chutes or guides by shovels which are retracted rhythmically such that, when the first slice has fallen to the table, it is transported by a bar underneath the following guide where the second slice is being fed by retraction of the shovel of that guide. Further, each guide is provided, above its lower end, with a blocking device for holding the last but one slice within the guide.

The automatic packing of biscuits and of other products, which may or not be alimentary, is already known as applicable to the packing of ready made alimentary products, even when cooked. In the specific case of slices of toasted bread, the most important problem to solve, as already said in advance, was represented by the fact that the slices did not slip between each one against the other.

This inconvenient caused that the production phase from ready product to packing, also contained even manual phase to make portions. This last phase can involve human intervent. Thus, the whole cycle was as follows:

| | |
|---|---|
| 1: phase of coocking and slices preparation | automatic |
| 2: phase of portioning | effectuated by operators |
| 3: phase of packing | automatic. |

It is the opinion of the author of the invention that such a machine, able to make portions of toasted bread, with an uninterrupted automatic cycle is not available on the market. The adoption of the machine, subject of the present patent application, in a good stuff and specifically concerned with better toasted bread, gives the following advantages:
- saving of labour;
- production increase, as the cycle becomes shorter;
- improvement of the hygienic conditions.

It is important to pay attention to the fact that the production can increase without limits. It depends on the quantity of machines adopted by the firm, without the necessity to increase the number of operators.

The portioning machine, subject of the present patent application, finds its best utilization in alimentary manufacturers and/or firms they producing toasted bread slices to be packed in packages or boxes. This portioner machine can, of course, be used, for all products, alimentary or not, for which a portioning operation is requested.

The assignee of the present patent application uses said machine at the output of the oven from which the slices of toasted bread exit and are channelized in special guides, and in a prearranged way, passing through the automatical portioning cycle, they finish said cycle with the packaging phase.

The invention will now be described and detailed with reference to the presently preferred embodiment which is reported for illustrative and not limiting purposes with reference to the figures attached where:
Figure 1 shows a front view of the portioning machine,
Figure 2 shows a side view of one of the guides,
Figure 3 shows a front view of the guide illustrated in Fig. 2,

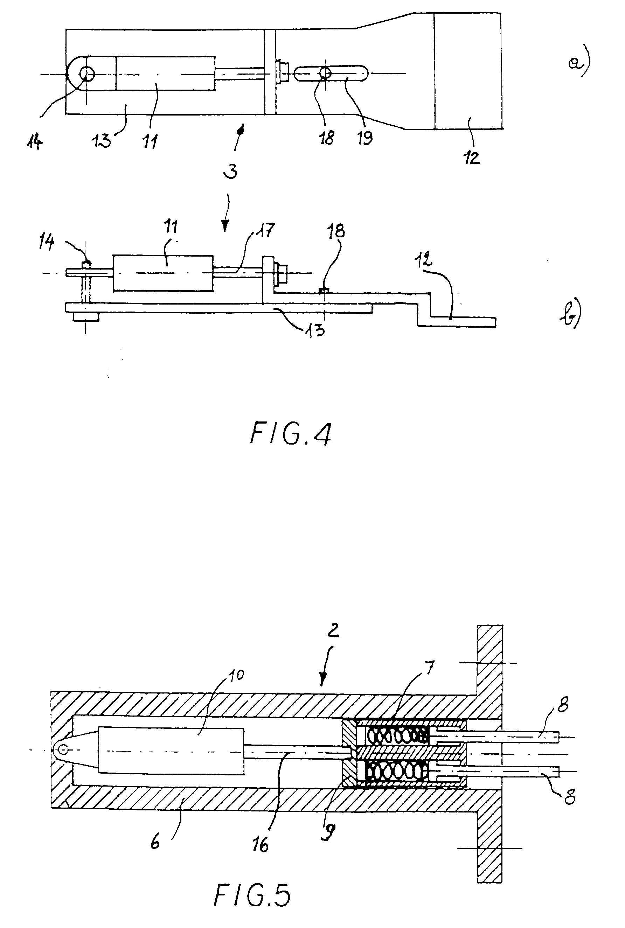

Figure 4 is a top view (4a) and a side view (4b) of one of the shovel devices,
Figure 5 is a longitudinal section in a vertical plane of one of the blocking devices.

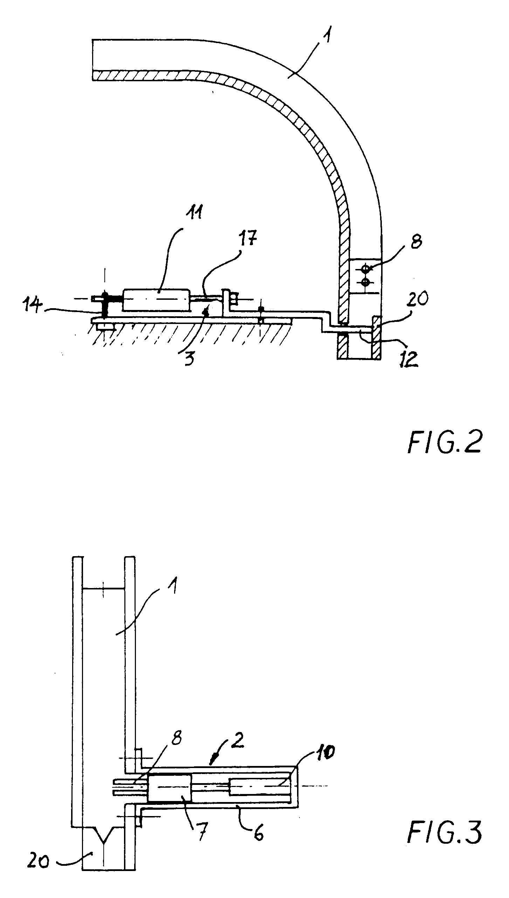

The most important part of the machine is a central body shaped as a quarter of a truncated cone and consisting of a set of guides 1, 1', 1'', ... arranged one after the other when seen in the operation direction of the whole machine. Each guide has a horizontal part connected to an oven floor (not illustrated) and a vertical part, both parts being interconnected by a curved part (see fig. 2). According to the truncated cone configuration of the central body, the first guide 1 is bigger than the second guide 1', the second is bigger than the third guide 1'' and so on. The distance between one guide and the following, measured in a horizontal plane at the lower end of the guides, corresponds to the thickness of the slices to be handled. The open side of each guide 1, 1', 1'', ... is closed at its lower end by means of a supporting plate 20.

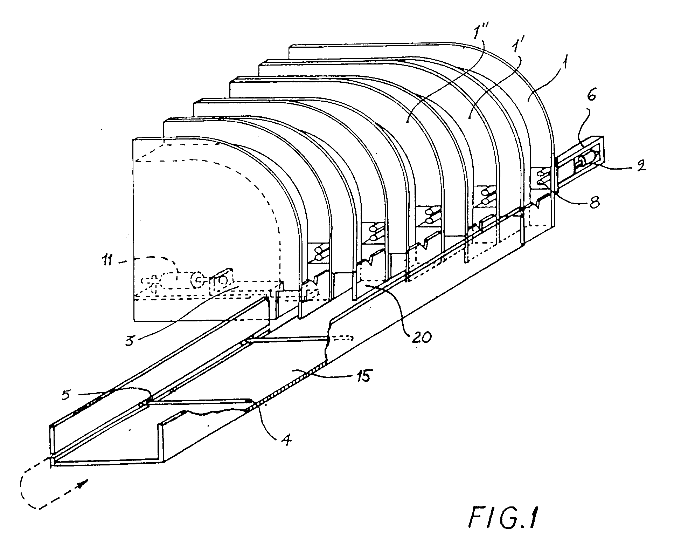

Under the central body, a fixed conveyor table 15 is provided. The vertical distance between the table 15 and the lower end of all of said guides 1, 1', 1'' ... is a bit greater than the vertical dimension (length or width) of the slices arriving on said table 15 in an upright position. As may be seen in fig. 1, on at least one side of the table 15 a moving conveyor means is provided, e.g. an endless chain 5 or belt to which transporting elements (bars 4) are fixed which are equidistantly spaced. The distance between two bars 4 corresponds to the horizontal dimension of the slices moving on the table 15. The length of each bar 4 corresponds to the height of the packages to be made, i.e. to the sum of the thickness of all slices in one package.

As indicated by the broken lined arrow in figure 1, the bars 4 fixed the conveyor means 5 (chain, belt or the like), underneath of the table 15 return to their initial position at the first guide 1.

To one side wall of the vertical part of each guide 1, 1', 1'' ... a blocking device 2 is fastened. As illustrated in figure 5, each blocking device 2 has a U-shaped housing 6 in which a working cylinder 10 (pneumatic cylinder) is mounted. The outer end of the piston rod 16 of said cylinder 10 is connected to a shock absorber 9 movable in said housing 6 and carrying two pins 8 which are arranged in a vertical plane. Each pin 8 is longitudinally movable in the shock absorber 9 against the force of a spring 7.

Figures 1 and 2 show that each of the guides 1, 1', 1'', ... is provided with a shovel device 3 having a support 13 fixed to the central body. To said support, a pneumatic cylinder 11 is fastened by means of a screw 14. The piston rod 17 of said cylinder 11 is connected to a shovel 12 having a staircase configuration. The free end of said shovel 12 penetrates into the vertical part of the corresponding guide 1 (1',1'',...) when the piston rod 17 is in its outermost position. A pin 18 is fixed to the upper surface of the support 13 and penetrates into a guiding slot 19 of the rear portion of the shovel element which slides on the upper surface of the support 13.

To make the invention easier to understand, a path followed by one slice of bread from portioning until packing is described.

The first slice, coming from the oven floor, is pushed by an existing system not of interest to this work, into guide 1, following the curved rail and arriving vertically onto the shovel 12 controlled by the pneumatic cylinder 11 (position of figure 2). Subsequently, the piston rod 17 moves back far enough to make the bread slice fall onto the table 15. Simultaneously to the movement of the shovel 12, the second slice, which in the meantime followed the first one, is blocked by the two pins 8 moved outwardly by the pneumatic cylinder 10; said movement finishes at the small side of the slice, entering into contact with both pins 8. The springs 7 of the shock absorber 9 restrict the pressure force of the pins 8 against the slice preventing in this way any damage or destruction to the slice.

Meanwhile, the first slice which has fallen in an upright position to the table 15, is transported by one of the bars 4 underneath the following guide 1'. Here, the next slice is fed by means of the second guide 1' which is retrograded with respect to the first guide 1 by a distance corresponding the thickness of the slice.

One slice, followed during its way by other slices as many as the program establishes to a complete package, pushed by the conveying bar 4, finishes its path, together with the others, on a fixed plane where the package is made while the bar 4, after leaving the slices on the packing plane, follows a U curve and continues its tour in order to begin an further cycle.

Preferably, the blocking devices 2 have at least two pins 8 which prevent any rocking motion of the slice held in the guide.

The distance between one guide and the following corresponds to the thickness of a slice, with enough tolerance to permit the slice to pass comfortably, on one side, conveyed by the chain 5, just when the shovel 3 leaves the slice.

The portioning machine is commanded by an electric motor, which rotates a shaft provided with cams having fins acting as a timer.

It may sometimes occur that in one of the guides 1, 1', 1'' ... a defective slice or no slice is fed; in order to prevent the production of a defective package, each guide 1, 1', 1'', ... or each blocking device 2 may be provided with a sensor that stops the whole machine for a short instant sufficient to supply a perfect slice.

The machine, now presented as an electromechanical machine, may also include an electronic-mechanical system.

In fact operation relating to the controller and to all parts of the machine can be moved rhythmically by an electronic system.

If the machine includes electromechanical or electronico-mechanical elements it is possible that a sole single operator works with many of these machines.

## Claims

1. Machine for the automatic production of portions of toasted bread slices or the like, comprising means for delivering the single slices to parallel guides of staggerd lengths, the number of which corresponds with the number of slices contained in each package, characterised in that the lower end of each guide (1, 1', 1'', ...) is provided with a retractable shovel device (3) holding the undermost slice in a vertical position, wherein the ends of the guides are positioned over a conveyor at a distance slightly greater than the vertical dimension of the upright standing slices, and that each guide (1, 1', 1'', ...) is provided, above its lower end, with a blocking device (2) for holding the last but one slice within the guide.

2. Machine according to claim 1, wherein the conveyor comprises a plurality of equidistantly spaced bars (4) moving over a fixed table (15), the distance between the bars (4) corresponding to the horizontal dimension of the slices moving on the table (15) and the length of the bars (4) corresponding to the height of each package.

3. Machine according to claim 2, wherein the bars (4) are fixed to an endless belt or chain (5).

4. Machine according to anyone of the preceding claims, wherein each shovel device (3) has a shovel (12) of a stepped configuration connected to a pneumatic cylinder (11) and guided on a support (13).

5. Machine according to anyone of the preceding claims, wherein the blocking device (2) comprises a cylinder (10) the piston rod (16) of which is connected, by means of a shock absorber (9), to at least one pin (8) adapted to contact the small side of the slices within the guide.

6. Machine according to claim 5, wherein the pin (8) is longitudinally movable in the shock absorber (9) against the force of a spring (7).

7. Machine according to anyone of the preceding claims, wherein the guides (1, 1', 1'', ...) form a body of a quarter-troncocone configuration in which the guides are retrograded one behind the other.

## Patentansprüche

1. Vorrichtung für die automatische Herstellung von Portionen getoasteter Brotscheiben oder dgl. mit einer Einrichtung zur Zuführung der einzelnen Scheiben zu parallelen Führungen gestaffelter Länge, deren Zahl der Zahl der in jeder Packung enthaltenen Scheiben entspricht, **dadurch gekennzeichnet**, daß das untere Ende jeder Führung (1, 1', 1'', ...) eine zurückziehbare Schaufeleinrichtung (3) aufweist, die die unterste Scheibe in einer vertikalen Stellung hält, wobei die Enden der Führungen über einem Förderer mit einem Abstand liegen, der etwas größer als die vertikale Abmessung der aufrecht stehenden Scheiben ist, und daß jede Führung (1, 1', 1'', ...) oberhalb ihres unteren Endes eine Sperrvorrichtung (2) zum Festhalten der jeweils vorletzten Scheibe in der Führung aufweist.

2. Vorrichtung nach Anspruch 1, **dadurch gekennzeichnet**, daß der Förderer mit Stangen (4) ausgerüstet ist, die oberhalb einer feststehenden Platte (15) beweglich sind und deren untereinander gleicher Abstand der horizontalen Abmessung der auf der Platte (15) bewegten Scheiben entspricht, wobei die Länge der Stangen (4) der Höhe jeder Packung entspricht.

3. Vorrichtung nach Anspruch 2, **dadurch gekennzeichnet**, daß die Stangen (4) an einem endlosen Riemen oder einer endlosen Kette (5) befestigt sind.

4. Vorrichtung nach einem der vorhergehenden Ansprüche, **dadurch gekennzeichnet**, daß jede Schaufeleinrichtung (3) eine stufenförmige Schaufel (12) hat, die mit einem Pneumatikzylinder (18) verbunden und auf einer Stütze (13) geführt ist.

5. Vorrichtung nach einem der vorhergehenden Ansprüche, **dadurch gekennzeichnet**, daß die Sperrvorrichtung (2) eine Zylindereinheit (10) hat, deren Kolbenstange (16) über einen Stoßdämpfer (9) mit wenigstens einem Stift (8) verbunden ist, der innerhalb der Führung in Berührung mit der Schmalseite der Scheiben kommt.

6. Vorrichtung nach Anspruch 5, **dadurch gekennzeichnet**, daß der Stift (8) in dem Stoßdämpfer (9) gegen die Kraft einer Feder (7) längsverschieblich gelagert ist.

7. Vorrichtung nach einem der vorhergehenden Ansprüche, **dadurch gekennzeichnet**, daß die Führungen (1, 1', 1'', ...) einen Körper in Form eines Viertels eines Kegelstumpfes bilden, in dem die Führungen eine hinter der anderen zurückgesetzt angeordnet sind.

## Revendications

1. Machine pour la confection automatique de portions de pain grillé ou d'un produit similaire, comprenant un mécanisme pour l'amenée tranche par tranche sur des guides parallèles et de longueurs décroissantes, le nombre de guides correspondant au nombre de tranches contenues dans chaque paquet, caractérisée par le fait que l'extremité inférieure de chaque guide (1, 1', 1'', ...) est équipée d'un dispositif rétractile à pale (3) pour arrêter la tranche inférieure en position debout, les extrémités des guides étant positonnées au-dessus d'un convoyeur à une distance légèrement supérieure à la hauteur des tranches debout, et par le fait que chaque guide (1, 1', 1'', ...) est muni à son extremité inférieure d'un dispositif de verouillage (2) pour arrêter l'avant-dernière tranche dans le guide.

2. Machine selon la revendication 1, caractérisée par le fait que le convoyeur présente des barres équidistantes (4) se déplaçant au-dessus d'une table (15), la distance entres les barres (4) correspondant à la dimension horizontale des tranches se déplaçant sur la table (15) et la longueur des barres (4) correspondant à la hauteur de chaque paquet.

3. Machine selon la revendication 2, caractérisée par le fait que les barres (4) sont fixées à une courroie ou chaîne (5) sans fin.

4. Machine selon une quelconque des revendications précédentes, caractérisée par le fait que chaque dispositif à pale (3) présente une pale (12) en forme de marche d'escalier reliée à un vérin pneumatique (11) et guidée sur un support (13).

5. Machine selon une quelconque des revendications précédentes, caractérisée par le fait que le dispositif de verouillage (2) présente un vérin (10) dont la tige de piston (16) est reliée par un amortisseur (9) à au moins un doigt (8) qui, à l'intérieur du guide, vient en contact avec le chant des tranches de pain.

6. Machine selon la revendication 5, caractérisée par le fait que le doigt (8) de cet amortisseur (9) est mobile dans le sens longitudinal et contre la force d'un ressort (7).

7. Machine selon une quelconque des revendications précédentes, caractérisée par le fait que les guides (1, 1', 1'', ...) sont positionnées en dégradé de telle sorte qu'ils s'inscrivent dans un quart d'un cône tronqué.
